# Europäisches Patentamt

## European Patent Office

## Office européen des brevets

(19)

(11) Veröffentlichungsnummer: **0 070 560**
A2

(12) # EUROPÄISCHE PATENTANMELDUNG

(21) Anmeldenummer: **82106534.9**

(22) Anmeldetag: **20.07.82**

(51) Int. Cl.³: **F 24 D 11/02**, F 25 B 39/02, F 24 J 3/04

(30) Priorität: **21.07.81 DE 3128685**

(43) Veröffentlichungstag der Anmeldung: **26.01.83**
**Patentblatt 83/4**

(84) Benannte Vertragsstaaten: **AT CH DE FR GB IT LI NL SE**

(71) Anmelder: **Pohlmeyer, Laurentius, Berliner Ring 3, D-4834 Harsewinkel (DE)**

(72) Erfinder: **Pohlmeyer, Laurentius, Berliner Ring 55, D-4834 Harsewinkel (DE)**
Erfinder: **Föste, Wolfgang, Siedinghausen, D-4804 Versmold (DE)**
Erfinder: **Bureick, Heribert, Marienfelderstrasse 12, D-4836 Herzebrock 2/Clarholz (DE)**

(74) Vertreter: **Meldau, Gustav, Dipl.-Ing. et al, Vennstrasse 9, D-4830 Gütersloh 1 (DE)**

(54) Vorrichtung zur Erwärmung von Wasser.

(57) Die Vorrichtung zum Erwärmen von Wasser nutzt fühlbare und latente Wärmeenergie des Abgases aus der Verbrennung von Öl oder Gas und/oder aus der Umgebungsluft aus, die dem Abgas und/oder der Umgebungsluft in einem einen Verdampfer einer Wärmepumpe enthaltenden Abgaskühler entzogen und dem im Heizungskreislauf geführten Wasser in einen im Rücklauf angeordneten, den Kondensator der Wärmepumpe enthaltenden Wärmetauscher übertragen wird, das vorgeheizt durch den Heizkessel strömt und gegebenenfalls unter zusätzlicher Heizung aus der Verbrennung von Öl oder Gas weiter erwärmt wird, wobei Wärme auch auf Brauchwasser übertragen wird. Der Abgaskühler ist durch einen ihn längs durchsetzenden Eintrittskanal und die Verdampfereinheiten in einen Eintrittsraum, einen Mischraum und einen Gassammel- und Abströmraum unterteilt, wobei das Abgas über schlitzförmige Aussparungen in der Wandung des Eintrittskanals und die Umgebungsluft über dazu korrespondierende, schlitzförmige Aussparungen in den Seitenwänden des Abgaskühlers in die Mischkammer strömen, wobei die Seitenwände des Abgaskühlers weiter kanalartig ausgebildete Einströmräume bilden.

## Vorrichtung zur Erwärmung von Wasser

Die Erfindung betrifft eine Vorrichtung zur Erwärmung von Wasser, insbesondere eines Heizungskreislaufs unter Nutzung der fühlbaren und der latenten Wärmeenergie von Abgasen einer Verbrennung und/oder von Umgebungsluft, wobei die Abgase vorteilhaft aus einer Verbrennungseinrichtung für flüssige oder gasförmige Brennstoff stammen, mit einer Wärmepumpe, deren Verdampfer als mit einem Kondensatsammelbehälter versehener Abgaskühler wärmetauschend im Abgaskanal der Verbrennungseinrichtung der Umgebungsluftzuführung nachgeschaltet angeordnet ist und deren Kondensator in Wärmetauschverbindung mit dem Wasserdurchlauf steht.

- 2 -

Aus der europäischen Patentanmeldung 79 105 317.6 (Veröffentlichungsnummer 0013018/A1) ist eine Vorrichtung zur Nutzung der
Wärme des Abgases einer Heizfeuerung mittels einer Wärmepumpe
bekannt, wobei der Verdampfer der Heizfeuerung vom Abgas beaufschlagt wird und der Kondensator der Wärmepumpe im Heizungskreislauf liegt. Aus dieser Veröffentlichung ist zu entnehmen,
daß insbesondere zum Ausfällen von Schadstoffen eine Kühlung
des Abgases bis unter dessen Taupunkt sinnvoll ist und daß
darüber hinaus auch die latente Wärme des Abgases genutzt
werden kann. Problematisch ist allerdings die Verhinderung
örtlicher Überhitzungen des Verdampfers.

Der Erfindung liegt in erster Linie die Aufgabe zugrunde eine
Anordnung eines Abgaskühlers anzugeben, bei dem örtliche Überhitzungen durch unkontrolliert eintretendes unverdünntes Abgas
unterbunden werden; darüber hinaus ist es weiter Aufgabe der
Erfindung eine Vorrichtung anzugeben, die in einfacher Weise
hergestellt, betrieben und gewartet werden kann und die insbesondere bei der Verwendung von gasförmigen Brennstoffen betriebssicher ist.

Diese Aufgabe wird nach der Erfindung dadurch gelöst, daß für
den Abgaskühler ein Gehäuse aus einem Unterkasten mit Seitenwänden und Boden sowie zwei Stirnwänden und aus einem Deckel
vorgesehen ist, daß mittig auf dem Boden ein sich über die gesamte Länge des Gehäuses erstreckender, einen Einströmraum für
die Abgase formender Einsatz vorgesehen ist und im Bereich
dieses Einströmraums einen Anschlußstutzen für den Abgaskanal
aufweist, daß der Einsatz über seine Länge gleichmäßig verteilte,das Abgas in einen Mischraum überleitende Durchbrüche
und die Seitenwände etwa in Höhe der Durchbrüche des Einsatzes
korrespondierend dazu angeordnete, Umgebungsluft überleitende
Durchbrüche aufweisen, daß der Verdampfer oberhalb des Einsatzes mit seinen Schmalseiten gasdicht an das Gehäuse anschließend einen vom Mischraum abgeteilten Gassammel - und Abströmraum formend angeordnet ist, in dessen Bereich das Gehäuse mit einem Anschlußstutzen zum Anschluß des Saugzuges versehen ist. Darüber hinaus wird vorgeschlagen, daß der Boden im
Bereich des Einströmraumes mit dem Anschlußstutzen versehen ist.
Alternativ dazu wird vorgeschlagen, daß eine der Stirnwände im
Bereich des Einströmraumes mit dem Anschlußstutzen versehen ist.
Schließlich wird vorgeschlagen, daß der Anschlußstutzen zum Anschluß des Saugzuges in dem Deckel des Gehäuses angeordnet ist.
Durch diese Ausbildung wird sichergestellt, daß die in den Abgaskühler eingeströmten Abgase der Verbrennungseinrichtung zunächst umgelenkt und mit Umgebungsluft in Berührung gebracht
werden. Die Einströmung kann dabei sowohl vom Boden aus erfolgen
als auch von einer Stirnseite. Beim Einströmen vom Boden aus
empfiehlt es sich eine Prallplatte zum Aufteilen der Strömung
mindestens oberhalb des Austrittsloches der Verbrennungsabgase
vorzusehen. Die Abströmung aus dem Gassammel- bzw. Abströmraum
erfolgt vorteilhaft durch die Decke des Gehäuses des Gaskühlers;
in genau der gleichen Weise kann jedoch auch die Abströmöffnung
in einer der Stirnwände des Gehäuses vorgesehen sein. Wesentlich
ist lediglich, daß durch die Anordnung der Abströmöffnung die
gleichmäßige Durchströmung des Verdampfers sichergestellt ist.

Weiter wird vorgeschlagen, daß der Verdampfer aus paarig angeordneten, schräg gestellten Wärmetauscherelementen gebildet ist.
Darüber hinaus wird vorgeschlagen, daß der Verdampfer aus
V-förmig nach oben öffnenden, mit den unteren Schmalseiten auf
den Schenkeln des winkelförmig ausgebildeten Einsatzes aufsitzenden Wärmetauscherelementen gebildet ist. Diese vorteilhafte
Weiterbildung gestattet ein symmetrisches Zuführen der Umgebungsluft durch die Durchbrüche in beiden Seiten des Gehäuses
des Abgaskühlers. Auf diese Weise können Mischung begünstigende
Strömungsverhältnisse eingestellt werden.

Weiter wird vorgeschlagen, daß der Abgaskühler in den Abgaskanal einer Brennkammer bzw. in die Auspuffleitung einer Verbrennungskraftmaschine eingeschaltet ist, wobei der Abgaskanal
der Brennkammer bzw. der Auspuffleitung der Verbrennungskraftmaschine eine, der Umgebungsluftzuführung des Abgaskühlers vorgeschaltete Umgebungsluftzumischung aufweist. Beim Betrieb von
Verbrennungseinrichtungen, die nicht ähnlich wie Heizkessel
wassergekühlte Wände aufweisen, hat das Abgas eine sehr viel
höhere Temperatur. Um auch hier einen gefahrlosen Betrieb der
Vorrichtung zu ermöglichen, ist der im Abgaskühler erfolgenden
Umgebungsluftzumischung vorgeschaltet eine weitere Umgebungsluftzumischung, so daß die Kühlung des Abgases zweistufig erfolgt. Dabei versteht es sich von selbst, daß unter Verbrennungseinrichtung nicht ausschließlich Brennkammern oder
Heizkessel verstanden werden, sondern auch Verbrennungskraftmaschinen, deren mechanische Leistung ausgekoppelt und andersweitig benutzt werden kann.

Weiter wird vorgeschlagen, daß die Wände der Brennkammer bzw.
der Verbrennungskraftmaschine und/oder der das Abgas ableitenden Kanäle vom Wasser des Wasserdurchlaufs gekühlt sind, wobei
das eintretende Durchlaufwasser vor seinem Eintritt mit dem
Kondensator der Wärmepumpe in Wärmetauschverbindung gestanden
hat. In dieser Ausführungsform wird der Vorrichtung eine Verbrennungseinrichtung zugrunde gelegt, die ähnlich wie ein Heizkessel oder eine Verbrennungskraftmaschine wassergekühlt ist,
wobei das bei der "Kühlung" erhitzte Wasser des Wasserdurchlaufs
beispielsweise in einem angeschlossenen Heizkreislauf Nutzung
findet.

In einer anderen Ausführungsform werden die äußeren Wände der
Brennkammer bzw. der Verbrennungskraftmaschine und/oder der das
Abgas leitenden Kanäle von Luft gekühlt, wobei die Luft, gegebenenfalls zur Vermischung mit einem der anderen Gasströme,
dem Mischraum des Gaskühlers zugeführt wird.

Beim Einsatz von Heißbrennkammern oder von luftgekühlten Verbrennungskraftmaschinen ist eine Kühlung der Verbrennungseinrichtung bzw. deren Wände durch Wasser nicht möglich. In diesem Falle wird die Abwärme, die über die Wände nach außen gegeben wird von einem Kühlluftstrom aufgenommen und zur Kühlung des Abgases diesem beigemischt. Dabei kann das Beimischen sowohl in · der dem Abgaskühler vorgeschalteten Umgebungsluftzumischung als auch im Abgaskühler selbst erfolgen. Wesentlich dabei ist, daß die von den Maschinenwänden abgegebene Verlustwärme mit der Nutzung zugeführt wird.

Eine Weiterbildung der Vorrichtung mit Verbrennungskraftmaschine als Verbrennungseinrichtung ist dadurch gekennzeichnet, daß die Abtriebswelle der Verbrennungskraftmaschine mit der Antriebswelle des das Kältemittel umwälzenden Kompressors und/oder eines Generators verbunden ist. Durch diese Anordnung wird die mechanische Arbeit selbst zum Antrieb einer Kompressionswärmepumpe genutzt. Die Leistungsziffern derartiger Anlagen sind erfahrungsgemäß besonders günstig. Darüber hinaus ist es sinnvoll einen Generator mit_laufen zu lassen, der zweckmäßig von einer Starterbatterie gepuffert ist. Bei dem intermetierenden Betrieb erzeugt der Generator hinreichend Strom, um die Regelung und Eigenüberwachung der Anlage zu gewährleisten und um nach Stillstand die Verbrennungskraftmaschine über die Batterie wieder anzuwerfen. Es versteht sich von selbst, daß auch eine durchlaufende Verbrennungskraftmaschine möglich ist, die einen Generator antreibt, der dann ständig Strom abgibt und daß der Wärmepumpenkompressor über eine ausrückbare Kupplung mechanisch mit der Verbrennungskraftmaschine gekuppelt ist oder daß der Wärmepumpenkompressor mit Elektroantrieb versehen ist, der mit der elektrischen Energie des Generators gespeist wird.
In diesem Falle kann der intermetierende Betrieb dadurch erreicht werden, daß ein Schutz von den Regel- bzw. Überwachungseinrichtungen bei Temperaturanfall angesteuert wird. In beiden Fällen ist eine Klappe vorzusehen, mit der bei Stillstand des Wärmepumpenkompressors das Abgas der Verbrennungseinrichtung
am Abgaskühler vorbei gleitet wird.

Eine besondere Ausbildungsform des Abgaskühlers ist dadurch
gegeben, daß die Durchbrüche sowohl des Einsatzes als auch
der Seitenwände als im wesentlichen über die gesamte Länge
verlaufende Ausnehmungen der Schenkel des Einsatzes bzw. der
Seitenwände ausgebildet sind. Durch diese Ausbildungsform ist eine einfache, materialsparende und wirtschaftliche Ausführungsform des Abgaskühlers gegeben. Dabei
können, ohne eine wesentliche Verschlechterung der Wirksamkeit zu erreichen, die Seitenwände - etwa um eine mechanisch stabile Ausbildung des Gehäuses zu erreichen - bis
zum Boden des Gehäuses des Abgaskühlers geführt sein.

Eine Weiterbildung ist dadurch gegeben, daß die schlitzförmigen
Durchbrüche in den Seitenwänden bzw. in den Schenkeln des
Einsatzes als Ausdrückungen ausgebildet sind, wobei die ausgedrückten Laschen einseitig mit den Seitenwänden bzw. mit den
Schenkeln des Einsatzes verbunden sind und die die einströmende
Umgebungsluft führenden Laschen unterhalb der Schlitze mit den
Seitenwänden und die die Abgase leitenden Laschen oberhalb der
dazu gehörenden Schlitze mit den Schenkeln des Einsatzes verbunden sind. Durch diese ausgedrückten Laschen wird eine
Strömungsleitung gegeben, die zweckmäßig so gerichtet ist, daß
die resultierenden Strömungen aufeinander gerichtet zu erhöhter
Turbulenz gezwungen werden. In Weiterbildung wird vorgeschlagen,
daß die die Umgebungsluft zuführenden Durchbrüche in den Seitenwänden mittels verschiebbarer, die freie Querschnittsfläche
der Durchbrüche veränderbar überdeckenden Blechstreifen versehen sind, die vorteilhaft mit einer Verstellvorrichtung mit
Rückholfedern versehen sind. In dieser Weiterbildung ist es
möglich die freie Öffnung der die Umgebungsluft zuführenden
Schlitze zu verändern. Damit ist eine Anpassung an örtliche Verhältnisse möglich, die dann besonders von Bedeutung ist,
wenn - etwa bei niedrigem Energiebedarf im Sommer - die Vorrichtung allein mit Umgebungsluft betrieben wird.

Eine andere Weiterbildung ist dadurch gegeben, daß die Seitenwände des Gehäuses des Abgaskühlers mittels wannenförmig ausgebildeter Abdeckungen als Zuführkanäle für die Umgebungsluft
ausgebildet sind. Diese Vorschläge gestatten ein gezieltes
Entnehmen der Umgebungsluft am gewünschten Ort. Dabei kann es
sich auch um Rückluft eines Lüftungssystems oder um warme Abluft aus anderen Quellen handeln. Die Übertragung des unvermeidbaren Geräusches des Abgassaugzuges auf die Umluftentnahme
kann durch die eingebauten Schalldämpfer wirksam unterdrückt
werden.

Eine andere Ausführungsform ist dadurch gegeben, daß mindestens
einer der Stirnwände abnehmbar ausgebildet ist und die unterhalb des Wärmetauscherelements des Verdampfers angeordneten Kondensatsammler wannenförmig und entnehmbar ausgebildet sind.
Darüber hinaus wird vorgeschlagen, daß der Boden des Gehäuses
des Abgaskühlers unterhalb der wannenförmigen Kondensatsammler
Durchbrüche aufweist und daß die Kondensatsammelbehälter mit
dazu korrespondierenden Kondensatablaufstutzen versehen sind.
Durch diese Ausbildung ist es möglich, das anfallende Kondensat
von Zeit zu Zeit oder kontinuierlich abzuführen. In beiden
Fällen kann das anfallende Kondensat, das in Folge in den Brennstoffen vorhandener Schwefelspuren immer sauer reagiert neutralisiert werden, wobei bei der kontinuierlichen Entahme des Kondensats über die Kondensatablaufstutzen eine Durchlaufneutralisationseinrichtung vorteilhaft ist.

Eine weitere Ausführungsform ist dadurch gegeben, daß die
Wärmetauscherelemente des Verdampfers als Lamellenwärmetauscher
mit senkrecht stehenden Lamellen ausgebildet sind.
Durch den Einsatz von Lamellenwärmetauschern ist es möglich in
einem kleinen Volumen eine große Tauscheroberfläche unterzubringen. Wesentlich dabei ist, daß das anfallende Kondensat
möglichst unbehindert abtropfen kann. Dies ist dann der Fall,
wenn die Lamellen senkrecht ausgerichtet sind, d.h. wenn die das
verdampfende Kältemittel führenden Rohre in Längsrichtung des
Abgaskühlers ausgerichtet sind. Das abtropfende Kondensat wird
vorteilhaft von Fangrinnen aufgenommen, die aus strömungsleitenden Kanten oder den strömungsleitenden Ausdrückungen gebildet werden.

Eine besondere Ausführungsform ist daduch gekennzeichnet, daß
der Abgaskühler korrosionsgeschützt ausgebildet ist, wobei die
Bauteile des Abgaskühlers vorzugsweise aus Edelstahl hergestellt sind bzw. mit einem Kunststoffüberzug, vorzugsweise
einem Polyvenilchloridüberzug versehen sind. Durch diese Ausführungsform ist es möglich den Korrosionsangriff des durch
die Schwefelverunreinigungen des Brennstoffs immer sauren Kondensats so zu beherrschen, daß ein dauerhafter Betrieb des
Abgaskühlers möglich ist.

Eine vorteilhafte Weiterbildung ist dadurch gegeben, daß das
Gehäuse des Abgaswärmetauschers fest im Grundrahmen bzw. -
Gehäuse der Vorrichtung montiert ist, wobei die anderen Aggregate auf Montageschlitten aufgebaut und mit die elektrischen
Leitungen bzw. die Rohrleitungen verbindenden Schnellverschlüssen versehen, austauschbar sind. Durch diese Bauweise
ist es möglich, den Ausfall der Vorrichtung zur Erwärmung von
Wasser bei Störung einzelner Aggregate durch deren einfachen Austausch zu beheben. Besonders von Bedeutung sind dabei die
Schnellkupplungen für den Kältemittelkreislauf, die entsprechend
den hinreichend bekannten Druckluftsteckverschlüssen mit einer
auf Druck ansprechenden Ausströmsicherung versehen sind.

Eine andere Ausführungsform zeichnet sich dadurch aus, daß
zwischen dem Unterteil des Abgaskühlers und Deckel ein weiterer
als zweite Stufe wirkender Verdampfer angeordnet ist. Beim
Betrieb der Vorrichtung zu Zeiten geringen **Energiebedarfs**
wird weitgehend auf Brennerunterstützung verzichtet. Um dabei
den notwendigen Wärmestrom fördern zu können, muß der Volumenstrom der Umgebungsluft entsprechend hoch gewählt werden. Die
zweite Verdampferstufe gewährleistet dabei, daß auch für diesen
Volumenstrom **noch hinreichend** Tauscherfläche zur Verfügung steht.

Eine weitere Ausführungsform ist dadurch gekennzeichnet, daß der
Kompressoreingang sowohl mit dem Kondensatorausgang als auch mit
dem Verdampferausgang und der Kompressorausgang sowohl mit dem
Verdampfereingang als auch mit dem Kondensatoreingang verbunden
sind, wobei jede der Verbindungsleitungen ein Umschaltventil enthält die paarweise miteinander umschaltbar sind und eine Vertauschung der Funktion von Kondensator und Verdampfer gestattet.
In dieser Schaltung wird die Funktion der Wärmepumpe umgekehrt
und Wärme dem erhitzten Wasser entnommen.

Schließlich wird als weitere Ausführungsform vorgeschlagen, daß
der Saugzug drehzahlumschaltbar ist, wobei eine elektrische
Verriegelung vorgesehen ist, die bei eingeschaltetem Brenner
den Betrieb des Saugzuges nur mit verringerter Drehzahl gestattet. Darüber hinaus wird vorgeschlagen, daß die verringerte
Drehzahl etwa bei 0,1 der Normaldrehzahl liegt. Beim Übergang
von Umluftbetrieb auf Betrieb mit Abgas vom **Brenner** der Verbrennungseinrichtung ändert sich die Temperaturdifferenz am
Wärmetauscher und der Wärmestrom, der dem Abgasumluftgemisch
entnommen werden soll, kann bei einem kleineren Massenstrom entnommen werden, als bei einem Umgebungsluftbetrieb mit kleiner Temperaturdifferenz. Die Verkleinerung des vom Saugzug geförderten Volumenstroms wirkt sich dabei auf die Stabilität der Flamme insbesondere eines Gasbrenners aus. Das bei vollem Volumenstrom des Saugzuggebläses mögliche Abreißen der Flamme wird so wirksam unterbunden.

Das Wesen der Erfindung wird anhand der Fig. 1 - 8 beispielhaft näher erläutert; dabei zeigen

Fig. 1 einen Querschnitt durch eine Vorrichtung zur Erwärmung von Wasser (schematisch geschnitten),

Fig. 2 eine Frontansicht mit teilweise aufgeschnittener Frontblende,

Fig. 3 einen Teilschnitt durch den Abgaskühler,

Fig. 4 eine Detaildarstellung des Abgaskühlers mit den Durchbrüchen für Abgas- und Umgebungsluft,

Fig. 5 einen halbperspektivischen Teilschnitt einer anderen Ausführungsform des Abgaskühlers,

Fig. 6 eine Frontansicht der Vorrichtung mit wassergekühltem Heizkessel,

Fig. 7 eine Frontansicht der Vorrichtung mit eingesetzter Verbrennungskraftmaschine,

Fig. 8 eine seitliche Ansicht der Vorrichtung mit wassergekühltem Heizkessel.

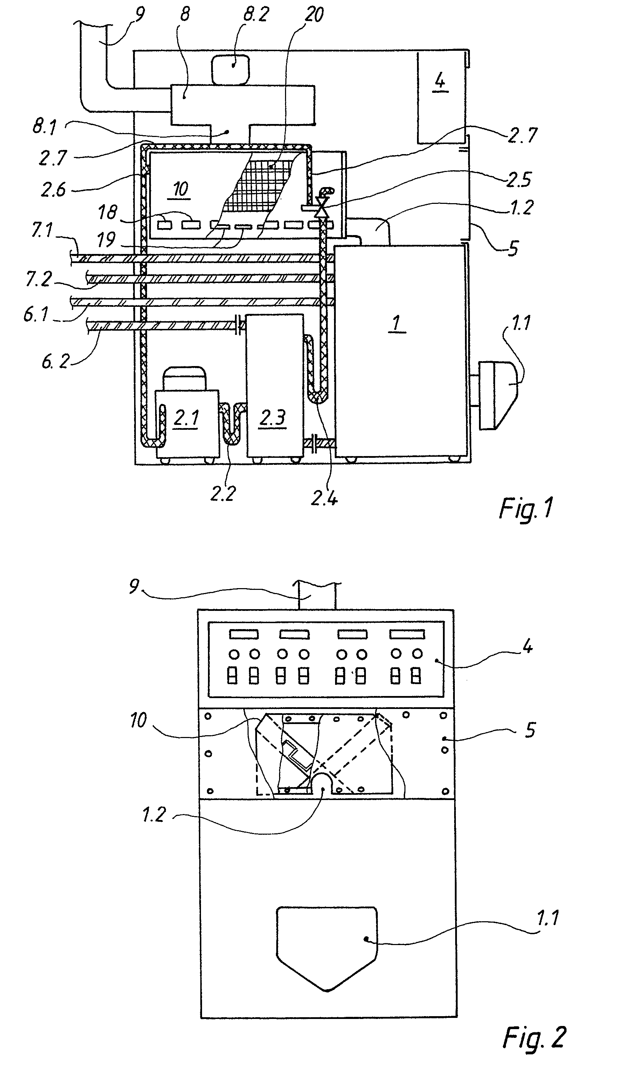

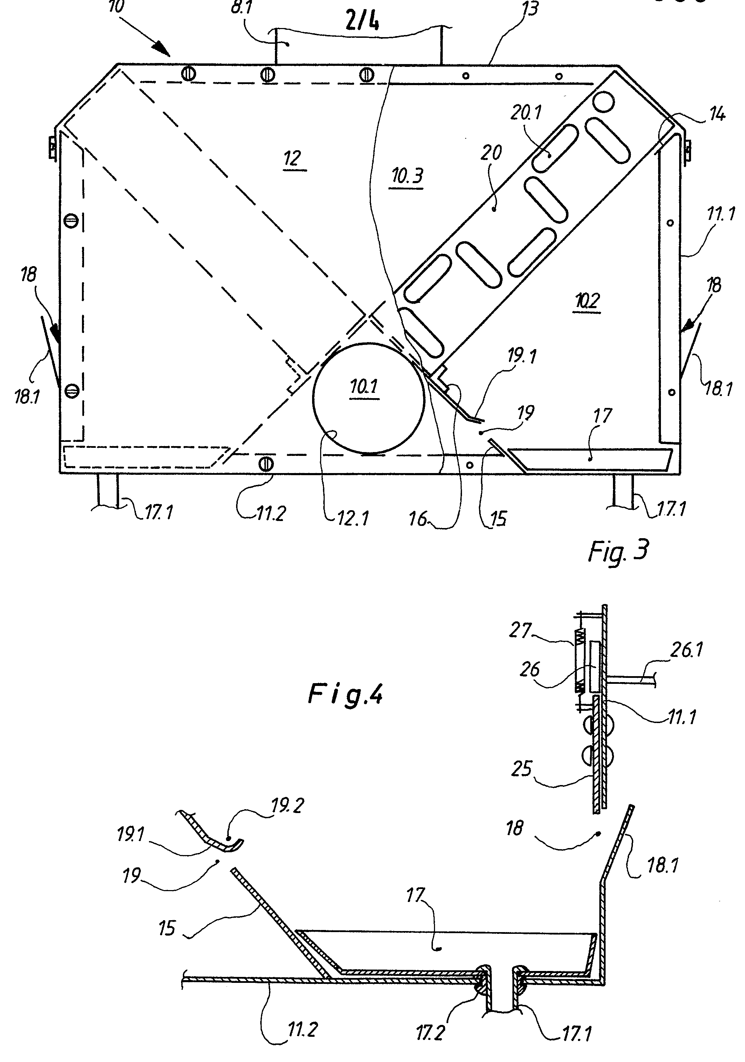

Im einzelnen zeigt die Figur 1 eine Kompaktanlage mit dem Heizungskessel 1, der mit dem Brenner 1.1 ausgestattet ist. Vom Heizungskessel 1 wird das Wasser im Heizungskreislauf 6 mit dem Heizungsvorlauf 6.1 und dem Heizungsrücklauf 6.2 sowie das Brauchwasser mit dem Frischwasserzulauf 7.2 und dem Warmwasserabgang 7.1 bedient. Der Heizungskessel 1 ist dabei von üblicher Bauart; insbesondere ist er zur Befeuerung mit Gas oder Öl eingerichtet. Das Abgas des Heizungskessels wird über den Abgaskanal 1.2 aus dem Kessel geschleust und verläßt über die Abgasleitung 9 das System, wobei der Saugzug 8 die Förderung des Abgases übernimmt. Zusätzlich zum Heizungskessel 1 ist eine Wärmepumpe 2 mit einem Kältemittelkreislauf vorgesehen, die im wesentlichen aus dem Kältemittelkompressor 2.1, dem Kondensator 2.3 und dem Verdampfer 2o sowie der das gasförmige Kältemittel rückführenden Leitung 2.6 besteht. In diesem Kreislauf ist weiter das Expansionsventil 2.5, das im dargestellten Beispiel als saugdruckgeregeltes Expansionsventil dargestellt ist. Die Verbindungsleitung 2.7 überträgt den Saugdruck auf das Stellglied dieses Expansionsventils. Der Abgaskanal 1.2 ist mit dem Abgaskühler 10 verbunden, an den über den Anschlußstutzen 8.1 der Saugzug 8 angeschlossen ist, der das Abgas in die Abgasleitung 9 fördert. Der Saugzug 8 wird dabei vom Antriebsmotor 3.2 angetrieben. Der Abgaskühler 10 mit dem Verdampfer 2o ist in Figur 3 im Detail dargestellt; auf diese Darstellung wird hier verwiesen. Die Steuereinheit 4 mit den Überwachungsinstrumenten, den Kontrolleuchten und den Schaltern übernimmt die Steuerung und Reglung des gesamten Systems.

Die Figur 2 zeigt die Vorrichtung in Frontansicht. Hinter der (nicht bezeichneten) Verkleidung befindet sich der Heizkessel 1, dessen Brenner 1.1 aus der Verkleidung hervorragt. Die Blende 5, durch die der Abgaskühler 1o zugängig wird, ist teilweise aufgeschnitten; der Abgaskanal 1.2 ist dadurch sichtbar. Die Frontplatte 12 (Fig. 3) des Abgaskühlers 1o ist teilweise aufgeschnitten, so daß die im Abgaskühler befindlichen, als Wärmetauscherelemente ausgebildeten Verdampfer zumindest teilweise sichtbar werden. Im Abgaskühler 1o wird das Kesselabgas, ein Gemisch aus Kesselabgas und Umgebungsluft oder Umgebungsluft allein, abgekühlt und über den - hier nicht dargestellten - Saugzug 8 und die Abgasleitung 9 ins Freie geleitet.

Die Figur 3 zeigt schließlich den Abgaskühler im Detail. Ein Unterkasten, gebildet aus den beiden Seitenwänden 11.1 und dem Boden 11.2 sowie den Stirnwänden 12, ist mit einem Deckel 13 versehen und bildet so das Gehäuse des Abgaskühlers 1o. Durch einen

Einsatz 15 wird ein einströmseitiger Raum 1o.1 gebildet; der außerhalb dieses Raumes liegende Restraum wird durch die Verdampfer in einen Mischraum 1o.2 und einen Gassammel- und Abströmraum 1o.3 geteilt. Eine Frontplatte 12 ist mit einem Eintrittsstutzen 12.1 versehen, der mit dem Rauchgaskanal 1.2 verbunden, das Rauchgas in den Einströmraum 1o.1 leitet. Durchbrüche 19 in dem Einsatz 15 gestatten es. dem Kesselabgas in den Mischraum überzuströmen, wobei durch die Geometrie des Durchbruchs 19 vorteilhafterweise ein Flachstrahl erzeugt wird, der durch den angedrückten Flansch 19.1 eine Vorzugsrichtung bekommt. Zu diesen Durchbrüchen 19 sind etwa in gelicher Höhe und korrespondierend dazu angeordnete Durchbrüche 18 (s. auch Fig. 4) in der Seitenwand 11.1 vorgesehen, die ebenfalls ausgedrückte Führungsflansche 18.1 aufweisen. Durch den vom Saugzug im Mischraum 1o.2 erzeugten Unterdruck wird auch über die Durchbrüche 18 Umgebungsluft in Form von Flachstrahlen angesaugt, die in ihrer Richtung den Flachstrahlen der Kesselabgase engegengesetzt gerichtet sind, auf diese auf diese auftreffen und sich in Mischturbulenzen auflösen. Der Mischraum 1o.2 wird durch den als V-förmig paarig ausgebildete Wärmetauscherelemente gebildeten Verdampfer 2o vom Gassammel- und Abströmraum getrennt. Das Kältemittel strömt dabei flüssig unter niedrigem Druck durch die Verdampferstränge 2o.1, wo es verdampft und dabei dem Kesselabgas bzw. der Umgebungsluft oder einem Gemisch beider die überschüssige fühlbare und latente Wärme teilweise entzieht. Diese Wärmetauscherelemente schließen mit ihren Schmalseiten gasdicht an die Umfassungswände des Gehäuses an, wobei zur besseren Halterung die Seitenwände 11.1 mit einem Auflagewinkel 14 und der Einsatz 15 mit unteren Haltewinkeln 16 versehen sind. Vorteilhafterweise wird der Haltewinkel 14 über die ganze Länge der Seitenwand durchgeführt, während die Haltewinkel 16 zum besseren Kondensatablauf vorteilhafterweise unterteilt sind. In einer bevorzugten Ausführungsform ist der obere Haltewinkel 14 durch das Abkanten der oberen Kante der Seitenwand 11.1 gebildet. Im Unterteil des Mischraums ist die das

ablaufende Kondensat aufnehmende Kondensatsammelwanne 17 angeordnet, die mit einem durch den Boden 12 des Gehäuses geführten Kondensatablaufstutzen 17.1 versehen ist. Das in den Wärmetauscherelementen des Verdampfers 2o abgekühlte Gas strömt in den Gassammelraum 1o.3 und strömt aus diesen durch den Anschlußstutzen
8.1 für den Saugzug ab.

Die Figur 4 zeigt eine Detaildarstellung der Durchbrüche sowohl
für das Kesselabgas im Einsatz 15 als auch für die Umgebungsluft
in der Seitenwand 11.1. Die Durchbrüche 19 und 13 liegen etwa
in gleicher Höhe, sie besitzen einseitig mit dem Einsatz 15 bzw.
der Außenwand 11.1 verbundene, ausgedrückte Flanschen 13.1 bzw.
19.1. Die Richtung dieser Flansche gibt die Strahlrichtung des
einströmenden Kesselabgases (19.1) sowie der einströmenden Umgebungsluft (18.1) vor. Dabei ist zu beachten, daß bei der dargestellten, rinnenförmigen Verformung 19.2 des kesselgasseitigen
Führungsflansches 19.1 der Cuandaeffekt den sich ausbildenden
ebenen Freistrahl leicht anhebt und in Richtung des Durchbruchs
18 führt. Diese Rinne 19.2 nimmt ablaufendes Kondensat auf und
verhindert ein Abreißen und Wiederrückführen von Kondensattropfen.
Bei hohem Kondensatanfall, wie er bei der Verbrennung von Kohlenwasserstoffen regelmäßig auftritt, ist die Kondensatabführung
durch einen Ablaufstutzen 17.1 vorteilhaft. Um ein Eindringen von
Falschluft unterhalb der Kondensatsammelschale 17 zu vermeiden,
ist der Durchbruch im Boden 11.2 zur Durchführung des Kondensatablaufstutzens 17.1 mit einer Dichteinlage 17.2 versehen, die
den Kondensatablaufstutzen 17.1 dichtend umschließt. Zur Reglung
der Umluftbeimischung ist ein Schieber 25 vorgesehen, der den
Durchbruch 18 veränderbar überdeckt und dabei den gewünschten
oder erforderlichen freien Querschnitt des Durchbruchs 18 einstellt. Dieses Schieberblech 25 kann in einfacher Weise in Langlöchern geführt werden, wobei die Führungszapfen in üblicher
Weise ausgebildet sein können. Die hier dargestellte, vernietete

- 14 -

Form ist nur eine der möglichen. Die Einstellung des Schiebers erfolgt in der Darstellung mittels des Exzenters 26, der von der Stellwelle 26.1 verdreht wird. Das Rückstellen wird durch die Rückholfeder 27 bewirkt. Jeder andere Verstellantrieb ist ebenfalls denkbar. Der Antrieb selbst kann sowohl von Hand als auch über automatische Verstelleinrichtungen erfolgen, wobei die wesentlichen Parameter der Unterdruck im Mischraum 10.2 (Fig. 3) und/oder die Temperatur im Gassammelraum 10.3 (Fig. 3) sind.

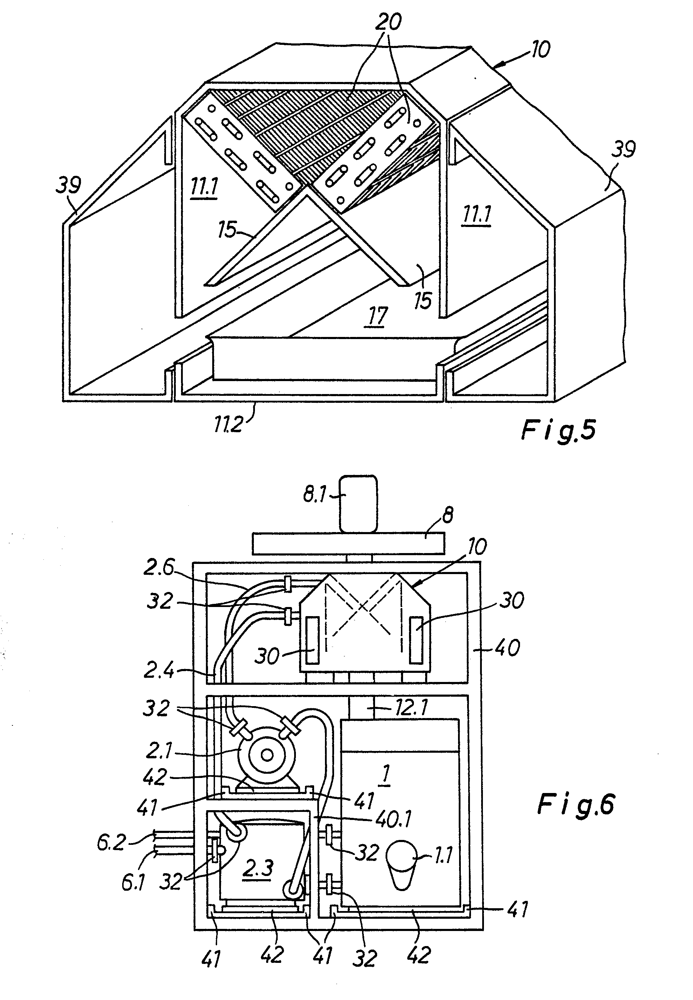

Die Fig. 5 zeigt eine halbperspektivische Darstellung eines Teilschnittes durch eine Ausführungsform des Abgaskühlers 10 mit den eingesetzten Lamellenwärmetauschern 20, die auf dem hier dachförmig ausgebildeten Einsatz 15 abgestützt sind. Die mit Durchbrüchen zur Einleitung der Umluft versehenen Seitenwände 11.1 sind in dieser Ausführungsform nicht bis zum Boden geführt, so daß der Durchbruch durch den über den Boden längs der Seitenwände verlaufenden Schlitz gebildet ist. Das Abgas der Verbrennungseinrichtung, das durch einen in Fig. 5 nicht näher dargestellten Anschlußstutzen mittig in den Abgaskühler einströmt, wird von dem dachförmigen Einsatz 15 gefangen, verteilt und nach beiden Seiten ausgelenkt. Zwischen den freien Kanten der Schenkel des Einsatzes 15 und den Seitenwänden 11.1 ist eine die Strömung einschnürende Verengung, durch die die eingeströmten Abgase und die eingeströmte Umgebungsluft abfließen müssen. Dabei kommt es zu erheblichen Strömungsturbulenzen, die die Mischung bewirken. Das mit der Umgebungsluft gemischte Abgas strömt dann durch die Lamellen der Wärmetauscher 20 und gelangt schließlich zu dem - in Fig. 5 nicht näher dargestellten - Abgasstutzen, wo es vom Saugzuggebläse 8 übernommen wird. Der Kondensatsammler 17 ist als wannenförmige Schale ausgebildet, die von Zeit zu Zeit entnommen und geleert werden muß.

Die Fig. 6 zeigt eine Frontansicht der Vorrichtung, versehen mit einem Heizkessel 1, wobei Heizkessel 1, Kältemittelkompressor 2.1 und Kondensator 2.3 in eine Rahmenkonstruktion 40 u.U. mit Hilfsrahmenkonstruktionen 40.1 in mehreren Ebenen eingeschoben werden.

Zum Einschienen dienen die Schienen 41, zwischen denen die Montageplatte 42, auf der das Aggregat aufgebaut ist läuft. Die hier dargestellte Form des Abgaskühlers 10 entspricht der dargestellt in Fig. 5, jedoch mit aufgesetzter Stirnplatte 12. Dabei sind die Anschlüsse für die Kanäle 30 ausgespart, um Umgebungsluft in die Umgebungsluftkanäle führen zu können.

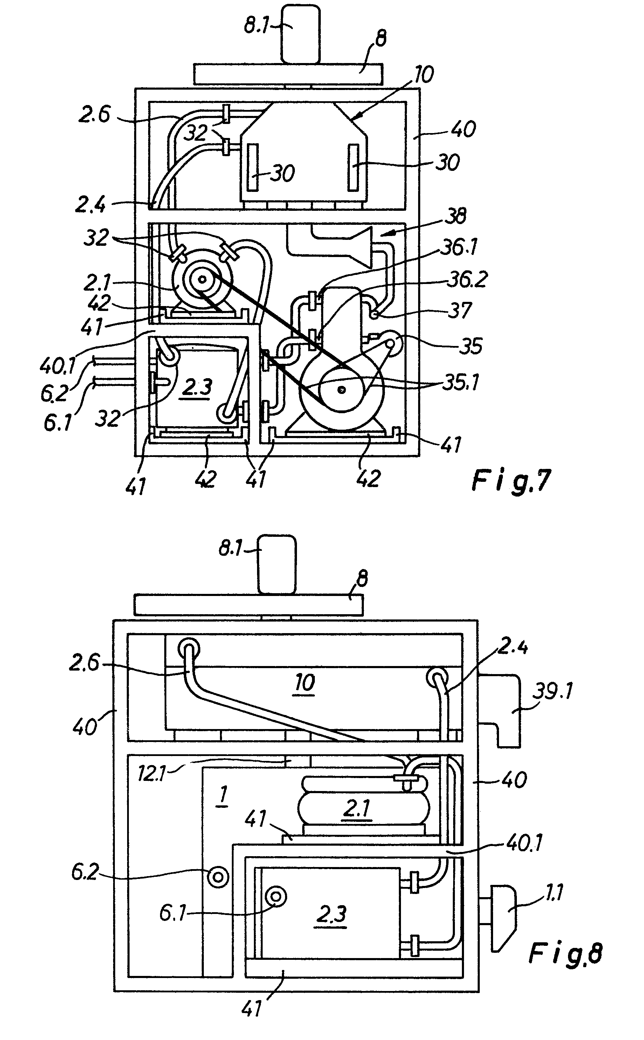

Die Fig. 7 entspricht weitgehend der Fig. 6, jedoch ist als Verbrennungseinrichtung eine wassergekühlte Verbrennungskraftmaschine 33 eingesetzt. Die Kühlung der Maschine erfolgt im Zuge der das zu erwärmende Wasser führenden Leitungen 6.1 und 6.2 über die Kühlwasseranschlüsse 36.1 und 36.2. Die mechanische Leistung der Verbrennungskraftmaschine wird über Riementrieb, Kettentrieb oder dergleichen 35.1 auf den Kompressor 2.1 bzw. auf den Generator 35 übertragen. Es versteht sich von selbst, daß der Generator 35 mit der aus der Kraftfahrzeugtechnik gemein bekannten Regel- und Puffertechnik durch eine Starterbatterie mit zwischengeschaltetem Regler ausgestattet ist. Die Auspuffleitung 37 mündet in die dem Abgaskühler vorgeschaltete ersten Umluftzumischung 38. Von hieraus strömt das durch das Zumischen vorgekühlte Abgas im Abgaskühler 10 zu, wird dort mit über die Kanäle 30 zugeführter Ugebungsluft zum zweiten Mal gemischt und vom Saugzug 8 durch die Wärmetauscher des Abgaskühlers 10 abgekühlt ins Freie gefördert.

Schließlich zeigt die Fig. 8 die Vorrichtung in seitlicher Ansicht, entsprechend dem schematischen Bild der Fig. 1, lediglich in geänderter Modulbauweise, wobei der Wärmetauscher 2.3 des Wärmepumpenkreislaufs mit dem Wasseranschluß 6.1 unter dem Kompressor 2.1 angeordnet ist. Eine Hilfsrahmenkonstruktion 40.1 innerhalb des Hauptrahmens 40 sowie in die beiden Ebenen eingeschobene Montageplatten 42 (Fig. 7) gestatten diesen Aufbau. In dieser Darstellung ist die Umgebungsluftansaugung, die in die Kanäle 30 überleitet, als schallgedämmter Ansaugkrümmer 39 ausgebildet.

P a t e n t a n w ä l t e

Dipl.-Ing.   G.Meldau

Dipl.-Phys.Dr.   H.-J.Strauß

4830 Gütersloh 1, Vennstraße 9, Postfach 24 52
Telefon: (0 52 41) 1 30 54

Datum

Unser Zeichen   P 728 jS/ms.

## Patentansprüche

1. Vorrichtung zur Erwärmung von Wasser insbesondere eines Heizungskreislaufs unter Nutzung der fühlbaren und der latenten Wärmeenergie von Abgasen einer Verbrennung und/oder von Umgebungsluft, wobei die Abgase vorteilhaft aus einer Verbrennungseinrichtung für flüssige oder gasförmige Brennstoffe stammen, mit einer Wärmepumpe deren Verdampfer als mit einem Kondensatsammelbehälter versehener Abgaskühler wärmetauschend im Abgaskanal der Verbrennungseinrichtung der Umgebungsluftzuführung nachgeschaltet angeordnet ist und deren Kondensator in Wärmetauschverbindung mit dem Wasserdurchlauf steht, dadurch gekennzeichnet, daß für den Abgaskühler (10) ein Gehäuse aus einem Unterkasten mit Seitenwänden (11.1) und Boden (11.2) sowie zwei Stirnwänden (12) und aus einem Deckel (13) vorgesehen ist, daß mittig auf dem Boden ein sich über die gesamte Länge des Gehäuses (10) erstreckender einen Einströmraum (10.1) für die Kesselabgase formender Einsatz (15) vorgesehen ist und im Bereich dieses Einströmraumes (10.1) einen Anschlußstutzen (12.1) für den Abgaskanal (1.2) aufweist, daß der Einsatz (15) über seine Länge gleichmäßig verteilte, das Abgas in einen Mischraum (10.2) überleitende Durchbrüche (19) und die Seitenwände (11.1) etwa in Höhe der Durchbrüche (19) des Einsatzes (15), korrespondierend dazu angeordnete, Umgebungsluft überleitende Durchbrüche (18) aufweisen, daß der Verdampfer (20) oberhalb des Einsatzes (15) mit seinen Schmalseiten gasdicht an das Gehäuse (10) anschließend, einen vom Mischraum (10.2) abgeteilten Gassammel- und Abströmraum (10.3) formend angeordnet ist, in dessen Bereich das Gehäuse (10) mit einem Anschlußstutzen (8.1) zum Anschluß des Saugzuges (8) versehen ist.

- 2 -

0070560

2. Vorrichtung nach Anspruch 1, dadurch gekennzeichnet, daß der Boden (11.2) im Bereich des Einströmraumes (10.1) mit dem Anschlußstutzen (12.1) versehen ist.

3. Vorrichtung nach Anspruch 1 oder 2, dadurch gekennzeichnet, daß eine der Stirnwände (12) im Bereich des Einströmraumes (10.1) mit dem Anschlußstutzen (12.1) versehen ist.

4. Vorrichtung nach einem der Ansprühce 1 - 3, dadurch gekennzeichnet, daß der Anschlußstutzen (8.1) zum Anschluß des Saugzuges (8) in dem Deckel (13) des Gehäuses (10) angeordnet ist.

5. Vorrichtung nach einem der vorstehenden Ansprüche, dadurch gekennzeichnet, daß der Verdampfer (20) aus paarig angeordneten schräg gestellten Wärmetauscherelementen gebildet ist.

6. Vorrichtung nach Anspruch 5, dadurch gekennzeichnet, daß der Verdampfer (20) aus V-förmig nach oben öffnenden mit den unteren Schmalseiten auf den Schenkeln des winkelförmig ausgebildeten Einsatzes (15) aufsitzenden Wärmetauscherelementen gebildet ist.

7. Vorrichtung nach Anspruch 6, dadurch gekennzeichnet, daß jeder Schenkel des winkelförmigen Einsatzes (15) mindestens zwei untere Führungswinkel (16) parallel zur Winkelkante des Einsatzes (15) und in einem der Stärke der Wärmetauscherelemente des Verdampfers (20) entsprechend Abstand von ihr aufweisen.

8. Vorrichtung nach einem der vorstehenden Ansprüche, dadurch gekennzeichnet, daß der Abgaskühler (10) in den Abgaskanal (1.2) einer Brennkammer (1) bzw. in die Auspuffleitung (37) einer Verbrennungskraftmaschine (33) eingeschaltet ist, wobei der Abgaskanal (1.2) der Brennkammer (1) bzw. die Auspuffleitung (37) der Verbrennungskraftmaschine (33) eine der Umgebungsluftzuführung des Abgaskühlers (10) vorgeschaltete Umgebungsluftzumischung (38) aufweist.

9. Vorrichtung nach Anspruch 8, dadurch gekennzeichnet, daß die Wände der Brennkammer (1) bzw. der Verbrennungskraftmaschine (33) und/oder der das Abgas ableitenden Kanäle (1,2;37) vom Wasser des Wasserdurchlaufs gekühlt sind, wobei das eintretende Durchlaufwasser vor seinem Eintritt mit dem Kondensator (23) der Wärmepumpe in Wärmetauschverbindung gestanden hat.

10. Vorrichtung nach Anspruch 9, dadurch gekennzeichnet, daß die äußeren Wände der Brennkammer (1) bzw. der Verbrennungskraftmaschine (33) und/oder der das Abgas ableitenden Kanäle (1,2; 37) von Luft gekühlt werden, wobei die Luft, gegebenenfalls unter Vermischung mit einem der anderen Gasströme, dem Mischraum (10.2), **des Gaskühlers** (10) zugeführt wird.

11. Vorrichtung nach einem der Ansprüche 8 - 10, dadurch gekennzeichnet, daß die Abtriebswelle der Verbrennungskraftmaschine (33) mit der Antriebswelle des das Kältemittel umwälzenden Kompressors (2.1) und/oder eines Generators (35) verbunden ist.

12. Vorrichtung nach einem der vorstehenden Ansprüche, dadurch gekennzeichnet, daß die Durchbrüche sowohl des Einsatzes (15) als auch der Seitenwände (11.1) als im wesentlichen über die gesamte Länge verlaufende Aussparung der Schenkel des Einsatzes (15) bzw. der Seitenwände (11.1) ausgebildet sind.

13. Vorrichtung nach einem der vorstehenden Ansprüche, dadurch gekennzeichnet, daß die schlitzförmigen Durchbrüche (18,19) in den Seitenwänden (11.1) bzw. in den Schenkeln des Einsatzes (15) als Ausdrückungen ausgebildet sind, wobei die ausgedrückten Laschen einseitig mit den Seitenwänden (11.1) bzw. mit den Schenkeln des Einsatzes (15) verbunden sind, und die die einströmende Umgebungsluft führenden Laschen (18.1) unterhalb der Schlitze (18) mit den Seitenwänden (11.1) und die die Abgase leitenden Laschen (19.1) oberhalb der dazu gehörenden Schlitze (19) mit den Schenkeln des Einsatzes (15) verbunden sind.

14. Vorrichtung nach einem der Ansprühce 11-13, dadurch gekennzeichnet, daß die die Umgebungsluft zuführenden Durchbrüche in den Seitenwänden (11.1) mittels verschiebbar, die freie Querschnittsfläche der Durchbrüche veränderbar überdeckenden Blechstreifen (25) versehen sind, die vorteilhaft mit einer Verstellvorrichtung (26) mit Rückholfedern (27) versehen sind.

15. Vorrichtung nach einem der Ansprüche 11 - 14, dadurch gekennzeichnet, daß die Seitenwände (11.1) des Gehäuses des Abgaskühlers (10) mittels wannenförmig ausgebildeter Abdekkungen (39) als Zuführungskanäle (30) für die Umgebungsluft ausgebildet sind.

16. Vorrichtung nach einem der vorstehenden Ansprüche, dadurch gekennzeichnet, daß mindestens eine der Stirnwände (12) abnehmbar ausgebildet ist und die unterhalb der Wärmetauscherelemente des Verdampfers (20) angeordneten Kondensatsammler (17) wannenförmig und entnehmbar ausgebildet sind.

17. Vorrichtung nach Anspruch 16, dadurch gekennzeichnet, daß der Boden (11.2) des Gehäuses des Abgaskühlers (10) unterhalb der wannenförmigen Kondensatsammler (17) Durchbrüche aufweist und daß die Kondensatsammelbehälter mit dazu korrespondierenden Kondensatablaufstutzen (17.1) versehen sind.

18. Vorrichtung nach einem der vorstehenden Ansprüche, dadurch gekennzeichnet, daß die Wärmetauscherelemente des Verdampfers (20) als Lamellenwärmetauscher mit senkrecht stehenden Lamellen ausgebildet sind.

0070560

19. Vorrichtung nach einem oder mehreren der vorstehenden Ansprüche, dadurch gekennzeichnet, daß der Abgaskühler (10)
korrosionsgeschützt ausgebildet ist, wobei die Bauteile des
Abgaskühlers vorzugsweise aus Edelstahl hergestellt sind bzw.
mit einem Kunststoffüberzug, vorzugsweise einem Polyvinylchloridüberzug versehen sind.

20. Vorrichtung nach einem der vorstehenden Ansprüche, dadurch
gekennzeichnet, daß das Gehäuse des Abgaskühlers (10) fest
im Grundrahmen (4a) bzw. -gehäuse der Vorrichtung montiert
ist, wobei die anderen Aggregate auf Montageschlitten (42)
aufgebaut und, mit die elektrischen Leitungen bzw. die Rohrleitungen verbindenden Schnellverschlüssen (32) versehen, austauschbar sind.

21. Vorrichtung nach einem der vorstehenden Ansprüche, dadurch
gekennzeichnet, daß zwischen Unterteil und Deckel des Abgaskühlers (10) ein weiterer als zweite Stufe wirkender Verdampfer angeordnet ist.

22. Vorrichtung nach einem oder mehreren der vorstehenden Ansprüche, dadurch gekennzeichnet, daß der Kompressoreingang
sowohl mit dem Kondensatorausgang als auch mit dem Verdampferausgang und der Kompressorausgang sowohl mit dem Verdampfereingang als auch mit dem Kondensatoreingang verbunden sind,
wobei jede der Verbindungseinleitungen ein Umschaltventil enthält, die paarweise miteinander umschaltbar sind und eine Vertauschung der Funktion von Kondensator (23) und Verdampfer
(12) gestatten.

23. Vorrichtung nach einem oder mehreren der vorstehenden Ansprüche
dadurch gekennzeichnet, daß der Saugzug (8) drehzahl - umschaltbar ist, wobei eine elektrische Verriegelung vorgesehen
ist, die bei eingeschaltetem Brenner den Betrieb des Saugzuges
(8) nur mit verringerter Drehzahl gestattet.

0070560

24. Vorrichtung nach Anspruch 23, dadurch gekennzeichnet, daß
die verringerte Drehzahl des Saugzuges (8) bei 0,1 der
Normaldrehzahl liegt.

*Fig. 1*

*Fig. 2*

Fig. 3

Fig. 4

Fig.5

Fig.6

4/4

Fig.7

Fig.8